# EUROPÄISCHE PATENTANMELDUNG

(11) **EP 1 114 837 A2**
(43) Veröffentlichungstag der Anmeldung: **11.07.2001**
(21) Anmeldenummer: 00124510.9
(22) Anmeldetag: 09.11.2000
(51) Int. Cl.: C08G 61/12

(54) **Verfahren zur Herstellung von doppelbindungshaltigen Polymeren durch ringöffnende Polymerisation**

(30) Priorität: 24.12.1999 DE 19963125
(71) Anmelder: Creavis Gesellschaft für Technologie und Innovation mbH, 45772 Marl (DE)
(72) Erfinder: Duda, Mark, Dr., 67071 Ludwigshafen (DE); Kühnle, Adolf, Dr., 45770 Marl (DE)

(57) **Zusammenfassung**

Verfahren zur Herstellung von doppelbindungshaltigen Polymeren durch Rutheniumcarben-Katalyse, wobei eine ringöffhende Polymerisation von Monomeren der Formel I 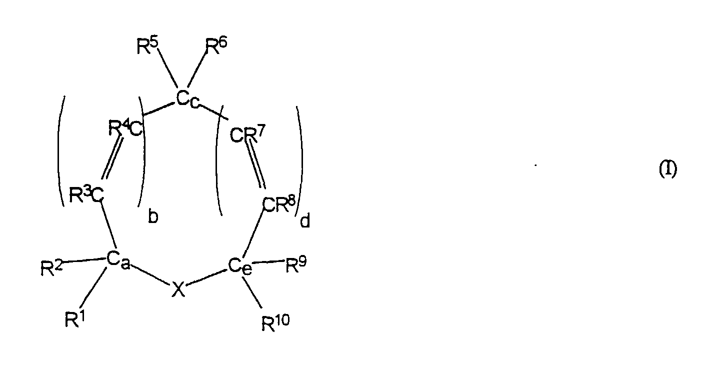 mit
- R¹, R², R³, R⁴, R⁵, R⁶, R⁷, R⁸, R⁹, R¹⁰ =: H, substituierter oder unsubstituierter, aliphatischer oder aromatischer Kohlenwasserstoffrest mit 1 bis 20 Kohlenstoffatomen,
- X =: O, S, NH, NR¹¹, wobei R¹¹ eine der Bedeutungen von R¹ hat,
- a, c, e =: 0, 1, 2 oder 3 und
- b,d =: 0, 1 oder 2
unter der Maßgabe, das b und d nicht gleichzeitig 0 bedeuten, durchgeführt wird.

Die Polymere können z. B. als Schlagzähigkeitsverbesserer oder Schmiermittelzusatz verwendet werden.

## Beschreibung

Die Erfindung betrifft ein Verfahren zur Herstellung von doppelbindungshaltigen Polymeren durch katalytische, ringöffnende Polymerisation sowie die Verwendung der Polymeren.

Doppelbindungshaltige Polymere sind wertvolle Rohstoffe, weil sie über die Doppelbindungen weiter funktionalisiert werden können. Sie sind häufig vulkanisierbare Elastomere und eignen sich deshalb sowohl für die Herstellung hochwertiger Elastomere als auch für die Modifizierung und das up-grading von Elastomeren.

Ein Beispiel für ein doppelbindungshaltiges Polymer ist z. B. das Polyoctenamer VESTENAMER^{R}, das durch metathetische Polymerisation von Cycloocten hergestellt wird ("Industrielle Organische Chemie" 1994, 98, VCH Verlagsgesellschaft mbH Weinheim).

Andere doppelbindungshaltige Polymere können z. B durch Polymerisation von Dihydrofuranen hergestellt werden. Dihydrofurane sind industriell aus Maleinsäureanhydrid leicht zugänglich.

So kann das über Erdgas herstellbare Maleinsäureanhydrid ("Industrielle Organische Chemie" 1994, 398-401, VCH Verlagsgesellschaft mbH Weinheim), über eine Hydrierung zwar zu preiswertem Dihydrofuran umgearbeitet werden, die metathetische Polymerisation dieser Furane liefert jedoch allenfalls niedermolekulare, ölige Polymere. So ist zwar die Herstellung von Polydiallylethern (JP 87-2993; C.T. THU, T. Bastelberger, H. Höcker, Elsevier Sequoia 0304-5102/85) beschrieben, die so hergestellten Polymere besitzen jedoch niedrige Molekulargewichte und erfordern sehr hohe Katalysatormengen. Als Katalysatoren wurden hier Chromcarbene wie (CO)₅Cr = C (C₆H₅)₂ und (CO)₅Cr = C (OCH₃) C₆H₅ verwendet, mit einem molaren Verhältnis des Ethers zum Carben 50 :1, was 50 000 ppm entspricht. Diese Polydiallylether sind in der Praxis häufig verfärbt, benötigen hohe Mengen Katalysator und müssen - sofern überhaupt möglich - aufwendig aufgearbeitet werden. Diese Aufarbeitung ist außerdem allenfalls in niedrigen Molekulargewichtsbereichen noch sinnvoll.

Für die Ring-Öffhende (ROMP) und Ring-Schließende (RIM) Polymerisation von Olefinen sind Osmium- oder Rutheniumkomplexe wie z. B. in WO 98/21214, WO 98/30557 oder WO 99/22865 beschrieben, eingesetzt worden. Diese Katalysatoren sind meist Komplexe der allgemeinen Formel 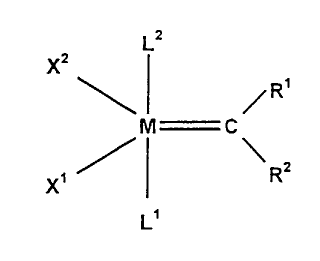 wobei R¹, R² substituierte oder unsubstituierte Kohlenwasserstoffreste, L¹, L² neutrale Elektronendonorliganden wie Phosphine, M = Rn, Os und X¹, X² anionische Liganden wie Halogene darstellen. Auch die Verwendung von Schiffschen Basen als Liganden ist in der Fachliteratur beschrieben. Katalysatorsysteme dieser Art eignen sich besonders für die methatetische Polymerisation von acyclischen oder cyclischen Olefinen wie z. B Cyclooctenen, Norbornenen oder Hexenen, die auch substituiert sein können. Weiterhin können auf diese Weise Kronenether, d. h. Oligomere hergestellt werden. Die Polymerisation von cyclischen Ethern zu ungesättigten Polymeren ist nicht beschrieben. Außerdem verwenden diese Verfahren relativ große Zusätze an Säuren, was für den Großmaßstab in Metallbehältnissen wegen Korrosionsproblemen unvorteilhaft ist.

Vergleichbare Katalysatorsysteme sind auch in Angew. Chem. 1998, 110, Nr. 18 (2631-2633) und Journal of Organometallic Chemistry 582 (1999) 362-365 beschrieben; erwähnt wird hier jedoch lediglich die Polymerisation verschiedener Norbornenderivate (z.B. Aldehyd, Alkohol, Keton, Carbonsäure, Carbonsäureester).

Die Aufgabe der vorliegenden Erfindung bestand darin, doppelbindungshaltige Polymere mit heller Eigenfarbe durch ROMP herzustellen. Die eingesetzten Katalysatormengen sollten so gering sein, daß der verbrauchte Katalysator direkt im Produkt verbleiben kann, so daß keine weiteren Aufarbeitungsschritte erforderlich sind. Wenn möglich, sollten die Monomere aus großtechnisch verfügbaren Quellen herstellbar sein, wie z. B. aus Erdgas oder C₄-Schnitten.

Gegenstand der vorliegenden Erfindung ist daher ein Verfahren zur Herstellung von doppelbindungshaltigen Polymeren durch Rutheniumcarben-Katalyse, wobei eine ringöffnende Polymerisation von Monomeren der Formel I 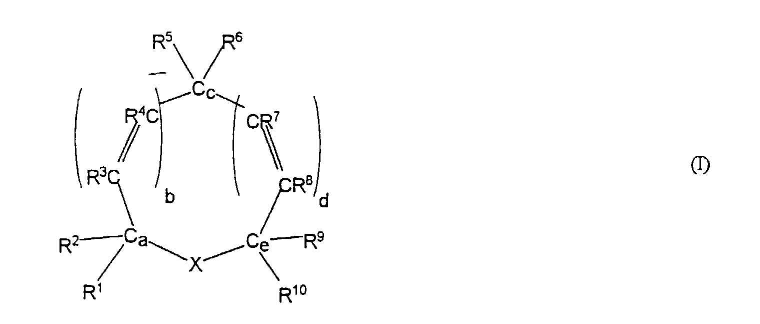 mit
- R¹, R², R³, R⁴, R⁵, R⁶, R⁷, R⁸, R⁹, R¹⁰ =: H, substituierter oder unsubstituierter, aliphatischer oder aromatischer Kohlenwasserstoffrest mit 1 bis 20 Kohlenstoffatomen,
- X =: O, S, NH, NR¹¹, wobei R¹¹ eine der Bedeutungen von R¹ hat,
- a, c, e=: 0, 1, 2 oder 3 und
- b, d =: 0, 1 oder 2
unter der Maßgabe, das b und d nicht gleichzeitig 0 bedeuten, durchgeführt wird.

Das erfindungsgemäße Verfahren kann z. B, mit 2, 3-Dihydrofuran als Monomer gemäß Formel I durchgeführt werden. Die Reaktion erfolgt dann nach der Gleichung:

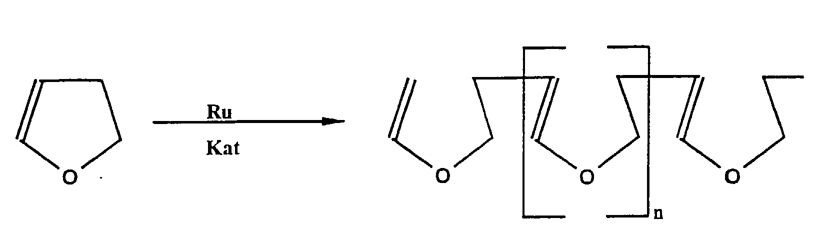

Als Monomer der Formel I können Ringsysteme mit mindestens drei Kohlenstoffatomen und einem Heteroatom, bevorzugt Fünfringsysteme mit einer bis zwei C-C Doppelbindungen, besonders bevorzugt substituierte oder unsubstituierte Furane oder Dihydrofurane, Pyrrole oder Dihydropyrrole, Thiophene oder Dihydrothiophene eingesetzt werden.

Es ist weiterhin möglich, N-substituierte Pyrrole oder Dihydropyrrole zu verwenden. Der Substituent R¹¹ am N-Atom in Formel I kann in diesen Ausführungsformen der Erfindung ein aliphatischer oder aromatischer Kohlenwasserstoffrest mit 1 bis 20 Kohlenstoffatomen gemäß R¹ wie z. B. eine Methyl- oder t-Butylgruppe sein.

Beispiele für Monomere, die im erfindungsgemäßen Verfahren verwendet werden können, sind z. B. 2,3-Dihydrofuran, 2-Hydroxymethyl-3,4-dihydro-2H-pyran, 5,6-Dihydro-2H-pyran-2-on, 5,6-Dihydro-4-methoxy-2H-pyran, Furan, Furan-3-carbaldehyd, Furan-2-carbonsäure, Furfural, Furfurylalkohol, 2,5-Dihydrofuran, 2,3-Dihydrofuran, 2,3-Dihydro-5-methyl-furan, Pyrrol-2-carbonsäure, Pyrrol-2-carbaldehyd, Thiophen, Thiophen-3-carbaldehyd und Thiophen-2-carbonsäure.

Die Substituenten der Monomere gemäß Formel I können auch Heteroatome wie O, S, N z. B. in Formen von Aldehyden, Carboxylfunktionen oder Alkoholgruppen enthalten.

In einer weiteren Ausführungsform der Erfindung werden die doppelbindungshaltigen Polymere durch Copolymerisation von Monomeren der Formel I mit mindestens einem weiteren olefinisch ungesättigten Monomeren hergestellt.

Die weiteren olefinisch ungesättigten Monomere können cyclische Verbindungen mit mindestens einer endocyclischen - optional einer exocyclischen - Doppelbindung sein. Hier kommen alle doppelbindungshaltigen monocyclischen, bicyclischen oder tricyclischen Ringsysteme wie z.B. Cyclopenten, Cyclohepten, Cycloocten, Cyclododecen, 1,4-Hexadien, Norbornen, Dicyclopentadien und 5-Ethyliden-2-norbornen in Frage. Selbstverständlich können diese Verbindungen mit weiteren cyclischen Alkenen copolymerisiert werden, so daß die entsprechenden Terpolymere herstellbar sind. Unter Berücksichtigung der hohen thermodynamischen Stabilität von Sechsringsystemen kann bei tiefen Temperaturen vorzugsweise unter 0 °C selbst Cyclohexen ringöffnend copolymerisiert werden.

Es ist weiterhin möglich, mehrere verschiedene Monomeren der Formel I in einer Copolymerisation gemäß der Erfindung umzusetzen, d. h. als weiteres olefinisch ungesättigtes Monomer können substituierte oder unsubstituierte Furane, Dihydrofurane, Pyrrole, Dihydropyrrole, Thiophene oder Dihydrothiophene eingesetzt werden.

Im erfindungsgemäßen Verfahren können jedoch auch acyclische Verbindungen wie Ethen, Propen, Butadien, n- und iso-Buten, Penten, Hexen oder C₈-Olefine als weiteres olefinisch ungesättigtes Monomer eingesetzt werden.

Die doppelbindungshaltigen Polymere bzw. Copolymere aus Monomeren der Formel I und den weiteren olefinisch ungesättigten Monomeren können zu 1 bis 99 Gew.-%, bevorzugt 10 bis 90 Gew.-%, besonders bevorzugt 50 bis 90 Gew.-% aus den Monomeren der Formel I bestehen.

Die im erfindungsgemäßen Verfahren eingesetzten Katalysatoren basieren vorzugsweise auf Ruthenium, an das ein Carben, ein Alkylcarben oder ein Arylcarben gebunden ist:
...Ru=CH₂, ...Ru=CHAlkyl, ...Ru=CHAryl

Weitere Liganden des Ruthenium sind ein oder zwei Anionen A:

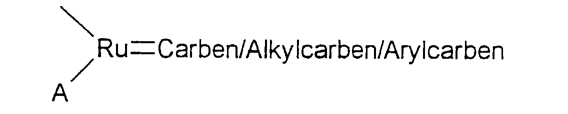

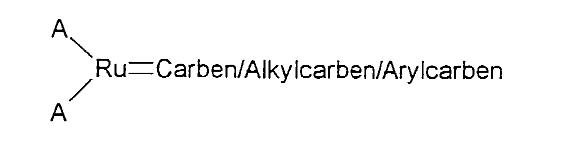

Diese Anionen A können Fluoratome, Chloratome, Bromatome, Jodatome, eine Acetatgruppe, oder eine Trifluoroacetatgruppe sein.

Zusätzlich kann an das Rutheniumatom eine Abgangsgruppe B, wie z.B. ein Tricyclohexlphosphan, ein heterocyclisches doppelbindungshaltiges System, das auch als Elektronendonator C fungieren kann, oder ein über mindestens zwei Halogenatome verbrückter Übergangsmetallkomplex, gebunden sein:

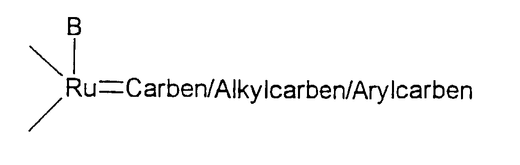

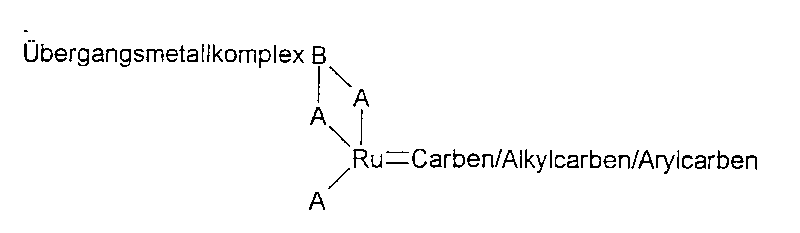

Der Elektronendonator C kann z. B. ein heterocyclisches, mindestens eine Doppelbindung enthaltendes System sein:

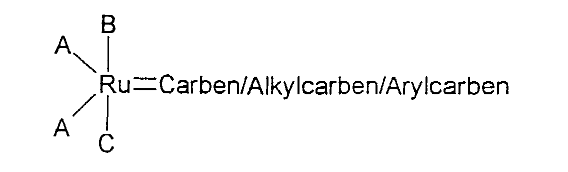

Für den erfindungsgemäßen Prozeß sind z. B. folgende Rutheniumcarbenkatalysatoren geeignet: 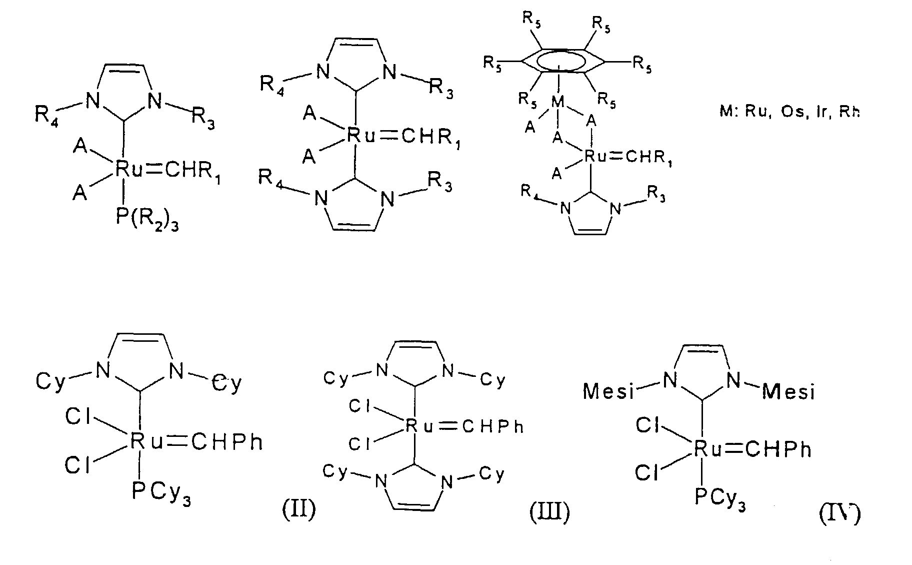 mit Cy = Cyclohexylrest, Ph = Phenylrest und Mesi = Mesitylrest, R₁, R₂, R₃, R₄, R₅= H, substituierter oder unsubstituierter aliphatischer oder aromatischer Kohlenwasserstoffrest mit 1-20 Kohlenstoffatomen.

Die nach der Erfindung hergestellten Polymere können mit einer Vielzahl von Additiven ausgerüstet werden. Dies sind z. B. Hitze- und Lichtstabilisatoren auf Basis sterisch gehinderter Phenole, Phosphite und sog. HALS-Stabilisatoren. Andere Additive sind z.B. Flammschutzmittel wie Antimontrioxid und bromierte Phenylether sowie Flammschutzmittel auf Aluminiumhydroxidbasis. Weiterhin kommen als

Additive Füllstoffe wie Ruß, Talkum, Kreiden oder Kalksteinmehl, Weichmacher, Gleitmittel, Netzmittel, Treibmittel, Antistatika, Fungizide, optische Aufheller und UV-Absorber in Betracht.

Die erfindungsgemäß hergestellten Polymere können sowohl mit zweiwertigen und höherwertigen Atomen wie z.B. Sauerstoff, Schwefel etc. als auch durch Bestrahlung wie z.B. Elektronenbestrahlung oder Bestrahlung mit UV-Licht vernetzt werden.

Das erfindungsgemäße Verfahren, d. h. die ringöffnende Polymerisation der Monomeren gemäß Formel I kann ohne Lösungsmittel, d. h. im Monomeren oder in einer Monomerenmischung oder in einem Lösungsmittel, bevorzugt in einem aprotischen Lösungsmittel wie THF, Hexan u. ä. durchgeführt werden. Die osmometrisch bestimmte Molmasse Mₙ der Polymeren beträgt in der Regel über 40 000 g/mol. Es sind aber auch deutlich höhere Molgewichte Mₙ wie 50 000 bis 250 000 oder 50 000 bis 100 000 g/mol herstellbar.

Die Polymerisation selbst kann durch inniges Verrühren der Monomeren mit dem Katalysator, gegebenenfalls unter Erwärmen der Reaktionsmischung durchgeführt werden. Typische Verfahrensweisen sind dem Fachmann wohlbekannt oder können den Beispielen entnommen werden. Im erfindungsgemäßen Verfahren werden bevorzugt weniger als 1000 ppm, besonders bevorzugt 500-1000 ppm, gznz besonders bevorzugt weniger als 500 ppm Rutheniumcarben-Katalysator, bezogen auf die Summe der Monomeren eingesetzt.

Vorteilhaft ist der schnelle Reaktionsverlauf des erfindungsgemäßen Verfahrens durch die verwendeten Katalysatorsysteme. Die nach den erfindungsgemäßen Verfahren hergestellten Polymere können als Schlagzähigkeitsverbesserer in Kunststoffen, als Schmiermittelzusatz, als Klebstoff, als Dichtungsmassen, als Additiv für lufttrocknende Beschichtungssysteme, als Beschichtungsmittel für Füllstoffe sowie als Haftvermittler und Vernetzungshilfsmittel in Kunststoffen verwendet werden.

Nach den einschlägigen DIN-ISO-Normen sind das Molekulargewicht und dessen Abkürzung wie folgt definiert:

Das in den Beispielen verwendete Mn (oder auch die osmometrische Molmasse) ist das Zahlenmittel der Molmasse in g/mol. Sie ist der Quotient aus Einwaage m in g durch Stoffinenge n in mol. Die Stoffmenge ist z.B. durch Osmose zu messen. Mn kann aber auch aus Abschnitten der Verteilungskurve der Gelpermeationschromatographie ermittelt werden.

Der Schmelzpunkt wurde über das DSC-Diagramm bestimmt, die Glassübergangstemperatur T_{g} wurde nach DIN 53 445 ermittelt.

Die folgenden Beispiele sollen die Erfindung näher erläutern, ohne ihren Schutzumfang einzuschränken:

Für die Vergleichsbeispiele wurde [RuCl₂(P(C₆H₁₁)₃)₂)] (Katalysator V) gemäß R.H. Grubbs et al., Angew. Chem. 1995, 107, 2179-2181 verwendet.

### Beispiel 1 (Vergleichsbeispiel):

In einem 250 ml Dreihalskolben wurden (ohne Verwendung von Lösemittel) unter Rühren und unter Luftausschluß 100 g 2,3 Dihydrofuran mit 10 mg Katalysator V bei Raumtemperatur umgesetzt. Nach 12 Stunden wurde ein zähflüssiges Produkt mit folgenden Eigenschaften erhalten:
Mn: 18 650
Glastemperatur Tg: - 62 °C
Schmelzpunkt: nicht bestimmbar
Farbe des Produktes: braun

### Beispiel 2 (erfindungsgemäß):

In einem 250 ml Dreihalskolben wurden (ohne Verwendung von Lösemittel) unter Rühren und unter Luftausschluß 100 g 2,3 Dihydrofuran mit 10 mg Katalysator II bei Raumtemperatur umgesetzt. Nach 2 Stunden wurde ein amorphes, festes Polymer mit folgenden Eigenschaften erhalten:
Mn: 278 000
Glastemperatur Tg: - 76 °C
Schmelzpunkt: ca. 48 °C
Farbe des Produktes: fast weiß

### Beispiel 3 (erfindungsgemäß):

In einem 250 ml Dreihalskolben wurden (ohne Verwendung von Lösemittel) unter Rühren und unter Luftausschluß 100 g 2,3 Dihydrofuran mit 10 mg Katalysator III bei Raumtemperatur umgesetzt. Nach 4 Stunden wurde ein amorphes, festes Polymer mit folgenden Eigenschaften erhalten:
Mn: 339 000
Glastemperatur Tg: - 60 °C
Schmelzpunkt: ca. 52 °C
Farbe des Produktes: weiß mit Gelbstich

### Beispiel 4 (erfindungsgemäß):

In einem 250 ml Dreihalskolben wurden (ohne Verwendung von Lösemittel) unter Rühren und unter Luftausschluß 100 g 2,3 Dihydrofuran mit 10 mg Katalysator IV bei Raumtemperatur umgesetzt. Nach 1 Stunde wurde ein amorphes, festes Polymer mit folgenden Eigenschaften erhalten:
Mn: 126 750
Glastemperatur Tg: - 56 °C
Schmelzpunkt: ca. 43 °C
Farbe des Produktes: weiß

### Beispiel 5 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Norbornen mit 10 mg Katalysator II bei einer Temperatur von 35 °C umgesetzt. Nach 4 Stunden wurde ein amorphes, festes Polymer mit folgenden Eigenschaften erhalten:
Mn: 42 550
Glastemperatur Tg: - 91 °C
Schmelzpunkt: ca. 33 °C.
Farbe des Produktes: weiß mit Gelbstich

### Beispiel 6 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Norbornen mit 10 mg Katalysator III bei einer Temperatur von 35 °C umgesetzt. Nach 4 Stunden wurde ein amorphes, festes Polymer mit folgenden Eigenschaften erhalten:
Mn: 56 850
Glastemperatur T_{g}: - 84 °C
Schmelzpunkt: ca. 39 °C.
Farbe des Produktes: weiß mit Gelbstich

### Beispiel 7 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Norbornen mit 10 mg Katalysator IV bei einer Temperatur von 35 °C umgesetzt. Nach 1 Stunde wurde ein amorphes, festes Polymer mit folgenden Eigenschaften erhalten:
Mn: 43 650
Glastemperatur T_{g}: - 61 °C
Schmelzpunkt: ca. 44 °C.
Farbe des Produktes: weiß

### Beispiel 8 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Cycloocten mit 10 mg Katalysator II bei einer Temperatur von 35 °C umgesetzt. Nach 3 Stunden wurde ein amorphes, festes Polymer mit folgenden Eigenschaften erhalten:
Mn: 43 300
Glastemperatur T_{g}: - 67 °C
Schmelzpunkt: ca. 32 °C.
Farbe des Produktes: weiß mit Gelbstich

### Beispiel 9 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Cycloocten mit 10 mg Katalysator III bei einer Temperatur von 35 °C umgesetzt.

Nach 4 Stunden wurde ein amorphes, festes Polymer mit folgenden Eigenschaften erhalten:
Mn: 45 650
Glastemperatur Tg: - 60 °C
Schmelzpunkt: ca. 37 °C.
Farbe des Produktes: weiß mit Gelbstich

### Beispiel 10 (erfindungsgemäß):

In einem 250 ml Dreihalskolben wurden (ohne Verwendung von Lösemittel) unter Rühren und unter Luftausschluß 90 g 2,3 Dihydrofuran gemischt mit 10 g Cycloocten mit 10 mg Katalysator IV bei einer Temperatur von 35 °C umgesetzt. Nach 2 Stunden wurde ein amorphes, festes Polymer mit folgenden Eigenschaften erhalten:
Mn: 41 150
Glastemperatur Tg: - 67 °C
Schmelzpunkt: ca. 35 °C.
Farbe des Produktes: weiß mit Gelbstich

### Beispiel 11 (Vergleichsbeispiel):

In einem 500 ml Dreihalskolben wurden unter Rühren und unter Luftausschluß 100 g 2,3 Dihydrofuran mit 10 mg Katalysator V in 250 ml n-Hexan bei Raumtemperatur umgesetzt. Nach 12 Stunden und nach Abdestillieren des n-Hexans wurde ein zähflüssiges Produkt mit folgenden Eigenschaften erhalten:
Mn: 24 300
Glastemperatur T_{g}: - 61 °C
Schmelzpunkt: nicht bestimmbar
Farbe des Produktes: hellbraun

### Beispiel 12 (erfindungsgemäß):

In einem 500 ml Dreihalskolben wurden unter Rühren und unter Luftausschluß 100 g 2,3 Dihydrofuran mit 10 mg Katalysator II in 250 ml n-Hexan bei Raumtemperatur umgesetzt. Nach 1 Stunde und nach Abdestillieren des n-Hexans wurde ein amorphes, festes Polymer mit folgenden Eigenschaften erhalten:
Mn: 125 000
Glastemperatur T_{g}: - 75 °C
Schmelzpunkt: ca. 41 °C
Farbe des Produktes: weiß

### Beispiel 13 (Vergleichsbeispiel):

In einem 500 ml Dreihalskolben wurden unter Rühren und unter Luftausschluß 100 g Cycloocten mit 10 mg Katalysator V in 250 ml n-Hexan bei Raumtemperatur umgesetzt. Nach 12 Stunden und nach Abdestillieren des n-Hexans wurde ein zähflüssiges Produkt mit folgenden Eigenschaften erhalten:
Mn: 14 200
Glastemperatur T_{g}: - 63 °C
Schmelzpunkt: nicht bestimmbar
Farbe des Produktes: hellgelb

### Beispiel 14 (Vergleichsbeispiel):

In einem 500 ml Dreihalskolben wurden unter Rühren und unter Luftausschluß 100 g Cycloocten mit 10 mg Katalysator V in 250 ml n-Hexan bei Raumtemperatur umgesetzt. Nach 3,5 Stunden und nach Abdestillieren des n-Hexans wurde ein amorphes, festes Polymer mit folgenden Eigenschaften erhalten:
Mn: 56 400
Glastemperatur Tg: - 63 °C
Schmelzpunkt: ca. 48 °C
Farbe des Produktes: weiß

## Patentansprüche

1. Verfahren zur Herstellung von doppelbindungshaltigen Polymeren durch Rutheniumcarben-Katalyse,
dadurch gekennzeichnet,
daß eine ringöffnende Polymerisation von Monomeren der Formel I 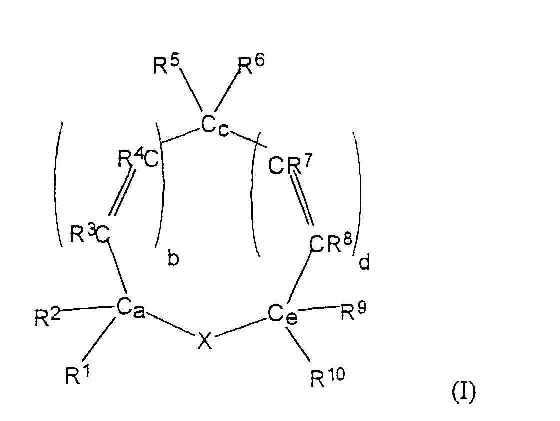 mit
R¹, R², R³, R⁴, R⁵, R⁶, R⁷, R⁸, R⁹, R¹⁰ = H, substituierter oder unsubstituierter, aliphatischer oder aromatischer Kohlenwasserstoffrest mit 1 bis 20 Kohlenstoffatomen,
X = O, S, NH, NR¹¹, wobei R¹¹ eine der Bedeutungen von R¹ hat,
a, c, e = 0, 1, 2 oder 3 und
b, d = 0, 1 oder 2
unter der Maßgabe, das b und d nicht gleichzeitig 0 bedeuten, durchgeführt wird.

2. Verfahren nach Anspruch 1,
dadurch gekennzeichnet,
daß eine ringöffnende Copolymerisation des Monomeren der Formel I mit mindestens einem weiteren olefinisch ungesättigten Monomeren durchgeführt wird.

3. Verfahren nach Anspruch 2,
dadurch gekennzeichnet,
daß das weitere olefinisch ungesättigte Monomer eine cyclische Verbindung mit mindestens einer endocyclischen Doppelbindung ist.

4. Verfahren nach Anspruch 2,
dadurch gekennzeichnet,
daß das weitere olefinisch ungesättigte Monomer eine acyclische Verbindung ist.

5. Verfahren nach einem der Ansprüche 1 bis 4,
dadurch gekennzeichnet,
daß als Monomer der Formel I jeweils substituierte oder unsubstituierte Furane, Dihydrofurane, Pyrrole oder Dihydropyrrole, Thiophene oder Dihydrothiophene eingesetzt werden.

6. Verfahren nach Anspruch 2 bis 5,
dadurch gekennzeichnet,
daß als weiteres olefinisch ungesättigtes Monomer jeweils substituierte oder unsubstituierte Furane, Dihydrofurane, Pyrrole, Dihydropyrrole, Thiophene oder Dihydrothiophene eingesetzt werden.

7. Verfahren nach einem der Ansprüche 2 bis 5,
dadurch gekennzeichnet,
daß die doppelbindungshaltigen Polymeren zu 1 bis 99 Gew.-% aus Monomeren der Formel I bestehen.

8. Verfahren nach einem der Ansprüche 1 bis 7,
dadurch gekennzeichnet,
daß die doppelbindungshaltigen Polymeren ein Molekulargewicht Mₙ von über 40.000 g/mol aufweisen.

9. Verfahren nach einem der Ansprüche 1 bis 8,
dadurch gekennzeichnet,
daß die ringöffnende Polymerisation ohne Lösungsmittel durchgeführt wird.

10. Verfahren nach einem der Ansprüche 1 bis 8,
dadurch gekennzeichnet,
daß die ringöffnende Polymerisation in einem aprotischen Lösungsmittel durchgeführt wird.

11. Verfahren nach einem der Ansprüche 1 bis 10,
dadurch gekennzeichnet,
daß bezogen auf die Summe der Monomeren weniger als 1000 ppm Rutheniumcarben-Katalysator eingesetzt werden.

12. Verfahren nach einem der Ansprüche 1 bis 11,
dadurch gekennzeichnet,
daß als Rutheniumcarben-Katalysator Verbindungen der Formeln II, III oder IV 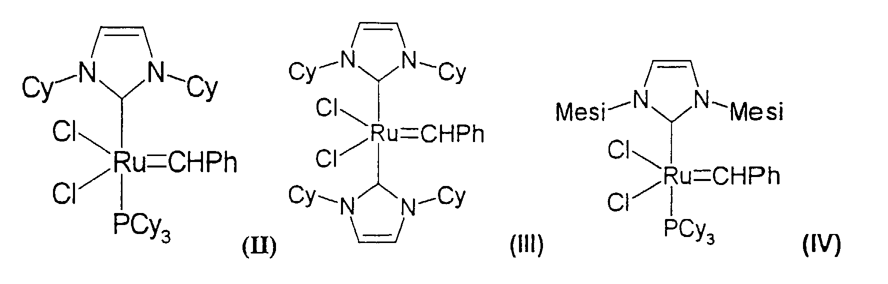 mit Cy = Cyclohexylrest, Ph = Phenylrest und Mesi = Mesitylrest
eingesetzt werden.

13. Verwendung der nach den Ansprüchen 1 bis 12 hergestellten doppelbindungshaltigen Polymeren als Schlagzähigkeitsverbesserer in Kunststoffen, als Schmiermittelzusatz, als Klebstoff, als Dichtungsmassen, als Additiv für lufttrocknende Beschichtungssysteme, als Beschichtungsmittel für Füllstoffe oder als Haftvermittler und Vernetzungshilfsmittel in Kunststoffen.
